# EUROPEAN PATENT APPLICATION

(11) **EP 4 474 793 A1**
(43) Date of publication of application: **11.12.2024**
(21) Application number: 24174699.9
(22) Date of filing: 08.05.2024
(51) Int. Cl.: G01N 1/31

(54) **AUTOMATED MELANIN BLEACHING**

(30) Priority: 09.06.2023 US 202363472078 P
(71) Applicant: Leica Biosystems Richmond, Inc., Richmond, Illinois 60071 (US)
(72) Inventor: COWDEN, Eric, Richmond, Illinois 60071 (US); PATEL, Aatish, Richmond, Illinois 60071 (US); OKEKE, Nnamdi, Richmond, Illinois 60071 (US); AMACHER, Carl, Richmond, Illinois 60071 (US)
(74) Representative: Simmons & Simmons

(57) **Abstract**

An automated slide staining apparatus includes a controller, a slide staining assembly, and at least one fluid dispensing robot. The slide staining assembly is configured to receive one or more of slides. The at least fluid dispensing robot is configured by the controller to dispense a plurality of reagents to the slides. The at least one fluid dispensing robot is configured by the controller to dispense the one or more reagents in a predetermined sequence corresponding to a slide staining protocol for the slides independently. The at least one fluid dispensing robot being further configured by the controller to dispense one or more bleaching agents in a predetermined sequence corresponding to a bleaching protocol for the slides independently. The at least one fluid dispensing robot being further configured by the controller to perform the bleaching protocol between one or more steps of the staining protocol.

## Description

### PRIORITY

This application claims priority to U.S. Provisional Patent App. No. 63/472,078, entitled "Automated Melanin Bleaching," filed on June 9, 2023, the disclosure of which is hereby incorporated by reference herein.

### BACKGROUND

Biopsy samples may be analyzed by a variety of techniques. For instance, in one example, biopsy samples may be placed onto microscope slides or other substrates for analysis. Staining of the biopsy samples may be used to enhance the visibility of certain features of the biopsy samples. Such staining may include, for example, hematoxylin and eosin stains to improve visibility of cell walls and the cell nucleus. Such staining may also include certain advanced staining techniques where antibodies are applied to the biopsy samples. The biopsy samples may then be stained to identify the presence or absence of particular proteins, which may be indicative of disease. Other reagents may be applied to biopsy samples such as RNA/DNA probes, which, during a sequence of reactions on the biopsy samples, may bind to DNA in the cell nucleus. The hybridized DNA may then be stained to identify presence or absence of DNA of interest.

In one context, biopsy samples of skin cells suspected of melanoma may be subjected to analysis. Analysis of such biopsy samples may have challenges due to the presence of high concentrations melanin - a pigment naturally present in skin. When melanin is present in sufficiently high concentrations, the pigment may mask antibody interaction with the cells making analysis of such biopsy samples challenging. In some examples, bleaching may be used to eliminate or otherwise reduce the presence of melanin. However, existing bleaching protocols may also introduce challenges. For instance, bleaching is performed separately from other staining processes by separate laboratories requiring transport of such biopsy samples from one laboratory to another. As a result, existing bleaching protocols may be time consuming and subject such biopsy samples to the risk of damage. Existing protocols are also not consistent between laboratories, leading to inconsistent performance. Accordingly, it may be desirable to incorporate bleaching into other staining protocols to improve processing time, reduce the risk of biopsy sample damage, and achieve improved consistency.

While several systems and methods have been made and used for staining a biopsy sample, it is believed that no one prior to the inventor has made or used the invention described in the appended claims.

### BRIEF DESCRIPTION OF THE DRAWINGS

While the specification concludes with claims which particularly point out and distinctly claim this technology, it is believed this technology will be better understood from the following description of certain examples taken in conjunction with the accompanying drawings, in which like reference numerals identify the same elements and in which:
FIG. 1 depicts a perspective view of an example of a slide-staining instrument;
FIG. 2 depicts a perspective view of a tray for use with the slid-staining instrument of FIG. 1;
FIG. 3 depicts another perspective view of the tray of FIG. 2 with a slide and slide cover loaded onto the tray;
FIG. 4 depicts a perspective view of a slide staining assembly of the slide-staining instrument of FIG. 1;
FIG. 5 depicts a flow chart of an example of a staining protocol for use with the slide-staining instrument of FIG. 1;
FIG. 6 depicts a flow chart of an example of a bleaching protocol for use in the slide staining protocol of FIG. 5 and the slide-staining instrument of FIG. 1; and
FIG. 7 depicts a schematic diagram of a control system configured to implement the staining protocol of FIG. 5 using the slide-staining instrument of FIG. 1.

The drawings are not intended to be limiting in any way, and it is contemplated that various embodiments of the technology may be carried out in a variety of other ways, including those not necessarily depicted in the drawings. The accompanying drawings incorporated in and forming a part of the specification illustrate several aspects of the present technology, and together with the description serve to explain the principles of the technology; it being understood, however, that this technology is not limited to the precise arrangements shown.

### DETAILED DESCRIPTION

The following description of certain examples of the technology should not be used to limit its scope. Other examples, features, aspects, embodiments, and advantages of the technology will become apparent to those skilled in the art from the following description, which is by way of illustration, one of the best modes contemplated for carrying out the technology. As will be realized, the technology described herein is capable of other different and obvious aspects, all without departing from the technology. Accordingly, the drawings and descriptions should be regarded as illustrative in nature and not restrictive.

### I. Overview of Example Slide-Staining Instrument

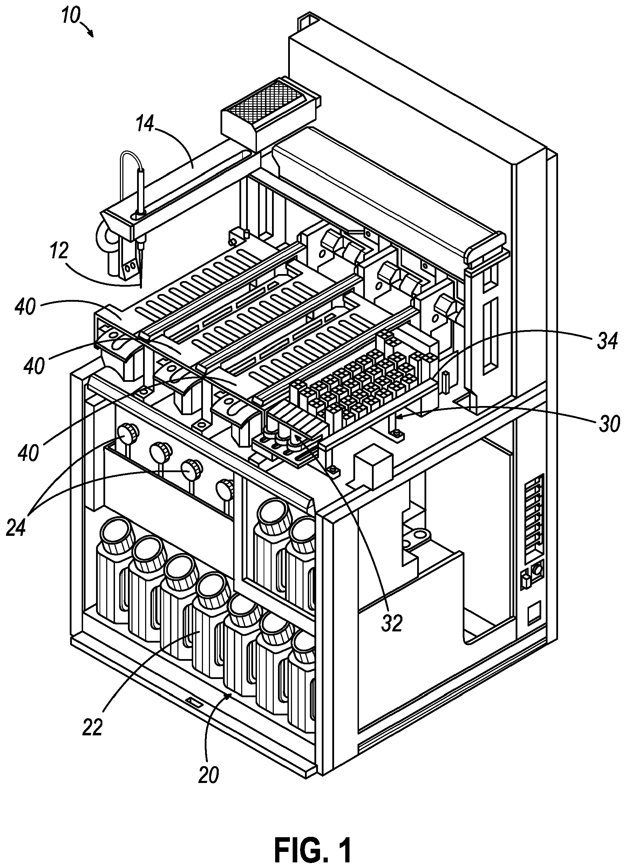

FIG. 1 shows an example of a slide-staining instrument (10) that is generally configured to automatically stain tissue mounted on microscope slides. Slide-staining instrument (10) includes a group fluid dispenser (12) (also referred to as an aspirating probe) mounted to a robotic arm (14) and a plurality of slide staining assemblies (40) disposed beneath robotic arm (14). As will be described in greater detail below, robotic arm (14) and slide staining assemblies (40) are generally configured to operate cooperatively to automatically dispense staining media onto one or more microscope slides disposed within each slide staining assembly (40).

To supply staining media, slide-staining instrument (10) includes a bulk container rack (20) and a reagent platform (30). Bulk container rack (20) is configured to hold a plurality of bulk containers (22). Bulk containers (22) may be configured to contain a relatively large quality of staining media or reagent that may be communicated to group fluid dispenser (12) and/or each slide staining assembly (40). Examples of staining media or other reagents may include epitope retrieval solutions, dewax solutions, deionized water, wash buffer solutions, and/or alcohol. Additionally, one or more of bulk containers (22) may be configured to contain waste fluids communicated from group fluid dispenser (12) and/or each slide staining assembly (40). In some examples, such waste fluids may be separated by slide-staining instrument (10) into bulk waste and hazardous waste. Thus, separate bulk containers (22) may be included for bulk waste and hazardous waste. A plurality of syringe pumps (24) may be included proximate bulk containers (22) to communicate fluid to or from bulk containers (22) relative to other portions of slide-staining instrument (10).

Reagent platform (30) is generally configured to receive one or more reagent trays (32). Each reagent tray (32) is configured to hold a plurality of reagent containers (34). Reagent containers (34) may be configured to contain a relatively small quantity of staining media or reagent for communication to group fluid dispenser (12) and/or slide staining assembly (40). Each reagent tray (32) may include a particular predetermined combination of reagent containers (34) to form a predefined reagent system. Such predefined reagent systems may be ready-to-use and may be discarded upon exhaustion during use with a particular staining protocol. In some examples, each reagent tray (32) may be registered upon insertion into reagent platform (30). Although not shown, it should be understood that in some examples, group fluid dispenser (12) may access reagent containers (34) directly. In other examples, one or more syringe pumps similar to syringe pumps (24) described above may be included to communicate staining media or reagents from reagent containers (34) to group fluid dispenser (12), slide staining assembly (40), and/or other portions of slide-staining instrument (10).

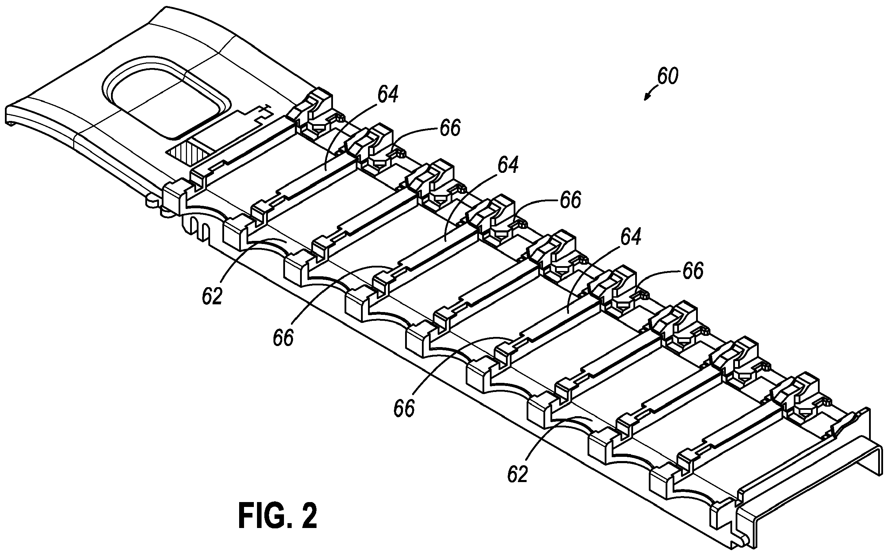

FIG. 2 shows an example of a slide tray (60) that may be used with slide-staining instrument (10) to hold one or more slides during staining via slide-staining instrument (10). Slide tray (60) includes a plurality of slide recesses (62) separated by rails (64). Each slide recess (62) is generally configured to receive an individual slide. Although not shown, it should be understood that each slide recess (62) may include an open bottom in some examples such that each slide may be supported within slide rack (60) at the periphery of each slide rather than in a center or middle of each slide. Thus, in some examples, each slide recess (62) may include one or more ledges, protrusions, supports or other features configured to support the outer edges of a slide received therein.

Slide tray (60) further include a plurality of couplers (66) with one or more couplers (66) being associated with a corresponding slide recess (62). Couplers (66) are generally configured to removably couple to a cover (70) (also referred to as a covertile). As will be described in greater detail below, covers (70) may be used to secure a slide in position on or within each slide recess (62). In some examples, couplers (66) may include one or more recesses on one side of a counterpart slide recess (62) and one or more snap-fits on another side of a counterpart slide recess (62). Of course, in other examples, couplers (66) may have a variety of other configurations as will be apparent to those of ordinary skill in the art in view of the teachings herein.

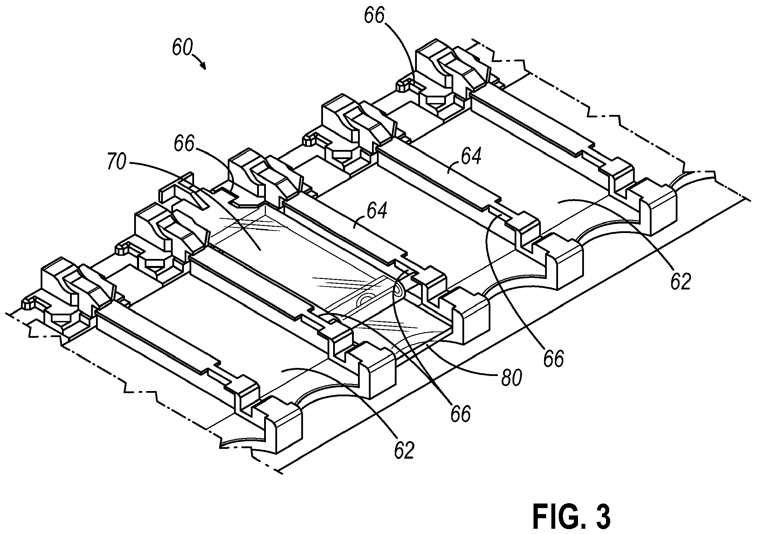

FIG. 3 shows the assembly of slide tray (60) and cover (70) to hold a slide (80) in greater detail. As can be seen, slide (80) may be disposed between cover (70) and slide tray (60) within a given slide recess (62). Cover (70) is generally configured to hold slide (80) in position and rest over slide (70) during staining. In this configuration, capillary action may draw reagent dispensed to slide (80) between cover (70) and slide (80). Such capillary action may be desirable to provide gentle and uniform tissue coverage with the dispensed reagent, thereby minimizing the volume of reagent used and protecting tissue from drying between applications. In some examples, cover (70) may be reusable, while cover (70) may be disposable in other examples.

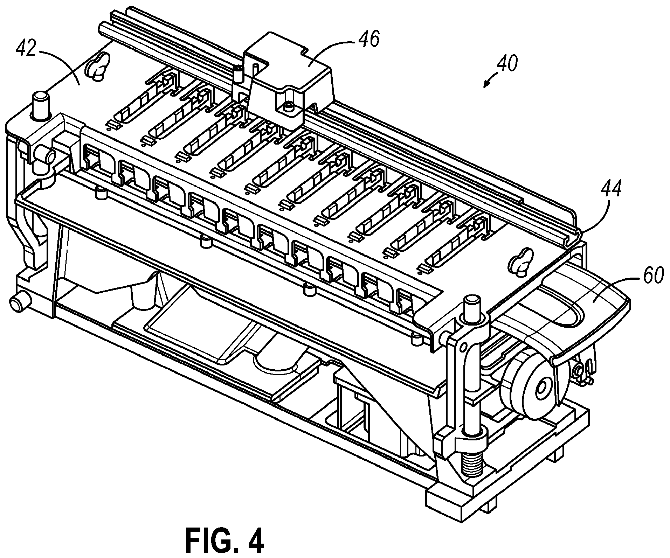

FIG. 4 shows an example of slide staining assembly (40) in greater detail. As described above, slide-staining instrument includes a plurality of slide staining assemblies (40) generally configured to operate cooperatively with robotic arm (14) to automatically dispense staining media onto one or more microscope slides disposed within each slide staining assembly (40). Specifically, each slide staining assembly (40) is configured to receive a corresponding slide tray (60). When slide tray (60) is loaded with slides such as slide (80) robotic arm (14) along with slide staining assembly (40) itself may be used to dispense slide staining media onto each slide loaded on slide tray (60).

Slide staining assembly (40) includes a top cover (42), a guide rail (44), and a batch fluid dispenser (46). Slide staining assembly (40) is configured removably receive and support slide tray (60) beneath top cover (42). Batch fluid dispenser (46) is configured to move along guide rail (44) relative to slide tray (60) to dispense slide staining media from one or more of bulk containers (22) onto slides contained within slide tray (60). In some examples, batch fluid dispenser may alternatively be characterized as a fluid dispensing robot. Although not shown, it should be understood that slide staining assembly (40) may include a plurality of heating elements corresponding to each slide recess (62) of slide tray (60). A portion of such heating elements can be incorporated into a support for each slide, which can be configured to communicate heat from heating elements to each slide. Thus, slide staining assembly (40) is configured to maintain each slide disposed within slide tray (60) at a selected temperature independently of the other slides.

In use, robotic arm (14) is used to position group fluid dispenser (12) relative to slide staining assembly (40) and reagent platform (30). Robotic arm (14) may then be moved to reagent platform (30) to gather one or more reagents with group fluid dispenser (12). Optionally, one or more reagents may be mixed or otherwise manipulated in a separate area of slide-staining instrument (10). Robotic arm (14) may then move to a selected slide staining assembly (40) to dispense gathered reagents onto one or more slides disposed within the selected slide staining assembly (40).

Simultaneously with use of robotic arm (14) to dispense reagents, or separately therefrom, each slide staining assembly (40) may dispense reagents or other staining media onto one or more slides disposed within a respective slide staining assembly (40). Specifically, batch fluid dispenser (46) may move along guide rail (44) to communicate one or more reagents or other staining media from bulk containers (22) onto slides via syringe pumps (24) and other components associated with slide-staining instrument (10). Thus, robotic arm (14) and slide staining assemblies (40) are configured to operate cooperatively to efficently complete staining protocols with one or more steps of a given staining protocol being performed simultaneously with one or more other steps. During the performance of such staining protocols, heaters included within each slide staining assembly (40) are used to maintain the temperature of individual slides at a selected temperature in accordance with such staining protocols.

### II. Example of Slide Staining Protocol for Use with Slide-Staining Instrument

As described above, slide-staining instrument (10) is configured to perform a variety of slide staining protocols where robotic arm (14) and/or slide staining assemblies (40) may automatically apply a variety of reagents and/or other slide staining media to slides under various predetermined parameters. Such slide staining protocols include a series of steps where various reagents and/or other slide staining media may be applied to individual slides in a predetermined order, in a predetermined volume at predetermined temperatures for predetermined periods of time. Although specific slide staining protocols are described herein in the context of biopsy samples including skin cells, it should be understood that in other examples, similar protocols may be used in other contexts with other cell types.

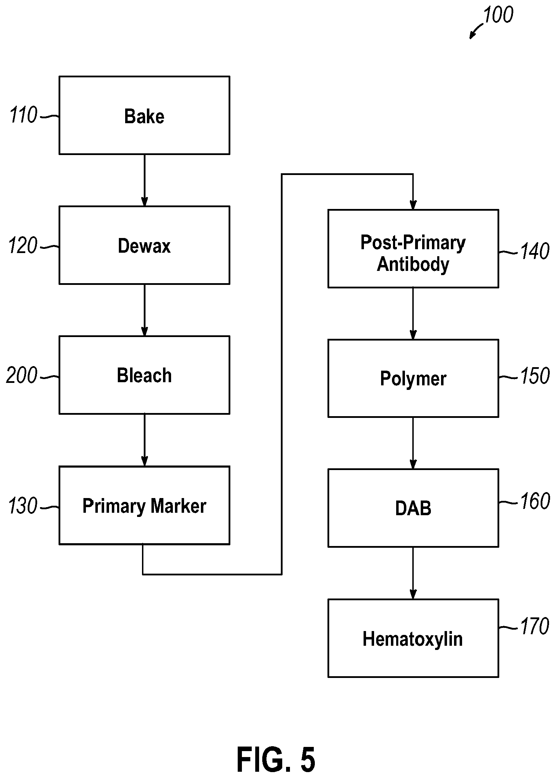

FIG. 5 shows an example of an advanced staining technique where antibodies are applied to slides as a part of a staining protocol (100), which includes an integrated bleaching protocol (200) that may be performed using slide-staining instrument (10). Thus, staining protocol (100) permits both staining processes and bleaching processes to be all performed automatically using slide-staining instrument (10). Such integration of bleaching protocol (200) may be desirable to promote consistency of bleaching, efficient processing of slides, and reduced tissue damage during processing.

As can be seen, staining protocol (100) begins with a baking step (110). Baking step (110) generally includes incubation of a given slide at a predetermined temperature for a predetermined time. Baking step (110) is generally desirable to promote tissue adhesion. In the present example, baking step (110) includes a 30 minute incubation time and a 60° C incubation temperature. Generally, no reagents or other slide staining media are applied during baking step (110), although in other examples at least some reagents or other slide staining media may be optionally applied. In other examples, various alternative time and/or temperature parameters may be used as will be apparent to those of ordinary skill in the art in view of the teachings herein. Such alternative time and/or temperature parameters may be influenced by the moisture content of the tissue and/or the desired adhesion.

After baking step (110), a dewaxing step (120) is performed. Dewaxing step (120) generally includes application of a predetermined volume of a dewaxing solution onto a given slide and incubation of the given slide at a predetermined temperature for a predetermined time. Dewaxing step (120) is generally desirable to remove paraffin wax from the tissue, which is used during embedding of the tissue. Once paraffin wax is removed, the tissue can be rehydrated and can receive subsequently applied reagents and/or other slide staining media. In the present example, dewaxing step (120) includes an application of 150 µL of dewaxing solution, although other suitable application volumes may be used. Additionally, dewaxing step (120) includes a 0.5 minute incubation time and a 72° C incubation temperature. In other examples, various alternative time and/or temperature parameters may be used as will be apparent to those of ordinary skill in the art in view of the teachings herein. Such alternative time and/or temperature parameters may be influenced by the amount of paraffin wax present and/or the type of dewaxing solution used. Although baking step (110) and dewaxing step (120) are shown and described herein as separate steps, it should be understood that in some examples both baking step (110) and dewaxing step (120) may be combined into a single step.

After baking step (110) and dewaxing step (120), a bleaching protocol (200) is performed. Bleaching protocol (200) is generally desirable to bleach melanin or other pigments disposed within tissue to avoid such pigments distorting the appearance of stained tissue or interfere with antibody-antigen interaction during staining. In other words, bleaching protocol (200) is desirable to improve the appearance of tissue once staining is complete. As will be described in greater detail below, bleaching protocol (200) includes performing a series of steps where a variety of reagents and/or slide staining media are applied at specific intervals, for specific times, and at specific temperatures.

After baking step (110), dewaxing step (120), and bleaching protocol (200), a primary marker step (130) is performed. Optionally, a wash step may be performed between bleaching protocol (200) and primary marker step (130), as described in greater detail below. Primary marker step (130) generally includes the application of one or more antibodies to a given slide. This includes, for example, dispensing about 150 µL of a primary marker solution and an incubation at about ambient temperature for about 30 minutes. Such antibodies may bond to particular structures of tissue to facilitate marking of such structures. Thus, a variety of antibodies may be used depending on the particular tissue structure desired for identification. Antibodies that may be used may include, for example, Melan A, MAGE-1, MAGE-3, tyrosinase, gp100, gp75, BAGE-1, and/or GAGE-1. Such antibodies may be used alone or in various combinations. Of course, various alternative antibodies may be used as will be apparent those of ordinary skill in the art in view of the teachings herein.

After baking step (110), dewaxing step (120), bleaching protocol (200), and primary marker step (130), a post-primary antibody step (140) is performed. Optionally, a wash step may be performed between primary marker step (130) and post-primary antibody step (140), as described in greater detail below. Such a wash may be desirable to remove any unbonded antibodies from a given slide. Post-primary antibody step (140) generally includes the application of one or more secondary antibodies to a given slide. This includes, for example, dispensing about 150 µL of a secondary marker solution and an incubation at about ambient temperature for about 8 minutes. Post-primary antibody step (140) generally includes the application of one or more secondary antibodies to a given slide. Such secondary antibodies are generally used in combination with one or more of the primary antibodies described above to enhance marking associated with the one or more primary antibodies. Thus, the particular secondary antibodies used may correspond to the particular primary antibodies used. Various suitable secondary antibodies for use with post-primary antibody step (140) will be apparent to those of ordinary skill in the art in view of the teachings herein.

After baking step (110), dewaxing step (120), bleaching protocol (200), primary marker step (130), and post-primary antibody step (140), a polymer step (150) is performed. Optionally, a wash step may be performed between post-primary antibody step (140) and polymer step (150), as described in greater detail below. Such a wash may be desirable to remove any unbonded antibodies from a given slide. Polymer step (150) generally includes the application of one or more polymer detection reagents to a given slide. This includes, for example, dispensing about 150 µL of a polymer reagent solution and an incubation at about ambient temperature for about 8 minutes. Polymer detection reagents are generally configured to provide high intensity staining with sharp delineation of antibody binding to the target antigen. Various suitable polymer reagents for use with polymer step (150) will be apparent to those of ordinary skill in the art in view of the teachings herein.

After baking step (110), dewaxing step (120), bleaching protocol (200), primary marker step (130), post-primary antibody step (140), and polymer step (150), a DAB step (160) is performed. DAB step (160) generally includes the application of a diaminobenzidine-based enhancement solution to a given slide. Specifically, the enhancement solution is generally configured to intensify the 3,3-diaminobenzidine (DAB) staining of formalin-fixed, paraffin-embedded tissue. DAB includes a chromogen, which produces an alcohol insoluble brown precipitate at the epitope site. This results in a darker brown staining at the reaction site due to copper salt precipitates. DAB step (160) of the present example includes dispensing of about 150 µL of the enhancement solution with an incubation at about ambient temperature for about 10 minutes.

After baking step (110), dewaxing step (120), bleaching protocol (200), primary marker step (130), post-primary antibody step (140), polymer step (150), and DAB step (160), a hematoxylin step (170) is performed. Hematoxylin step (170) generally includes application of a hematoxylin-based staining solution to a given slide. The hematoxylin-based staining solution is generally configured to provide counterstaining to allow the detection of cell nuclei. Hematoxylin step (170) of the present example includes dispensing of about 150 µL of the staining solution with an incubation at about ambient temperature for about 5 minutes.

Although not shown in one or more aspects of staining protocol (100), it should be understood that staining protocol may include one or more washing steps between any one or more of the steps (110, 120, 130, 140, 150, 160, 170) or protocols (200) described above. Such wash steps may be performed with a variety of solutions such as deionized water, concentrated buffer solutions, or various combinations thereof. In some examples, a wash may be performed after completion of bleaching protocol and before primary marker step (130). Similarly, a wash may be performed after primary marker step (130) to remove any unbonded antibodies. Of course, washes may additionally be performed after any other step (110, 120, 140, 150, 160, 170) described herein. Additionally, in some examples, wash steps can be added or removed at the discretion of an operator. During such wash steps, wash solution and/or deionized water is applied to a given slide and then removed or suctioned from the given slide.

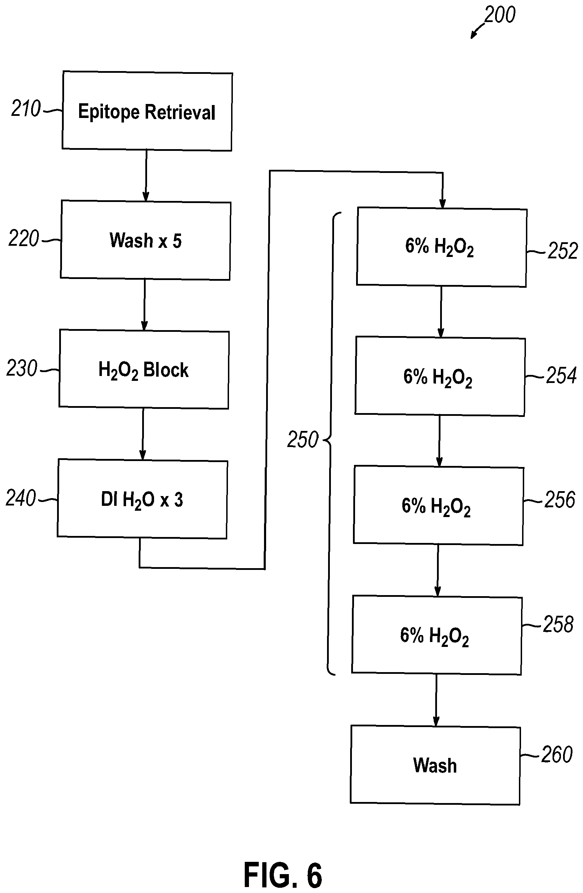

FIG. 6 shows bleaching protocol (200) in greater detail. As can be seen, bleaching protocol (200) includes a plurality of steps (210, 220, 230, 240, 250, 260) generally configured to bleach melanin or other pigments that may be present in tissue. As described above, slide-staining instrument (10) is configured to perform all steps of bleaching protocol (200), along with other steps of staining protocol (100). Thus, bleaching protocol (200) can be performed as a part of a continuous laboratory workflow without disruption, thereby efficently processing slides.

Bleaching protocol (200) begins with an epitope retrieval step (210). Epitope retrieval step (210) can be performed using heat induced epitope retrieval (HIER), enzyme pretreatment, or a combination of both. Formalin fixation of tissue causes crosslinking between aldehyde and amino groups in the tissue. Formation of these bonds may be undesirable due to variable loss of antigenicity. Thus, epitope retrieval step (210) may be used for remodification of the epitope to make tissue more readily stained by immunohistochemistry. In the present example, epitope retrieval step (210) includes dispensing about 150 µL of epitope retrieval solution and an incubation at about 100 C for about 60 minutes. However, various alternative quantities of epitope retrieval solution and incubation times and temperatures may be used depending on a variety of factors such as the pH of the retrieval solution, the fixation time of the specimen, the desired amount of retrieval, and/or etc. Although epitope retrieval step (210) is described herein as being a part of bleaching protocol (200), it should be understood that in other examples, epitope retrieval step (210) may alternatively be characterized as being a part of staining protocol (100) more generally. Thus, epitope retrieval step (210) may be performed in other staining protocols with or without a bleaching protocol such as bleaching protocol (200) described herein.

After epitope retrieval step (210), a wash step (220) is performed. Wash step (220) may be performed to remove any remaining epitope retrieval solution. In the present example, wash step (220) is performed using a concentrated buffer solution (10X concentration) at about a 1:10 dilution to obtain a working concentration. In other examples, different buffer solution concentrations may be used. In yet other examples, wash step (220) may be performed using other solutions such as deionized water. Wash step (220) of the present example includes dispensing about 150 µL of wash solution onto a given slide at ambient temperature with substantially no incubation. The dispense of about 150 µL is repeated five times for five total dispenses. In other examples, a variety of alternative dispenses may be used such as more than five, or less than five.

After epitope retrieval step (210), and wash step (220), a hydrogen peroxide block step (230) is performed. In the present example, hydrogen peroxide block step (230) includes dispensing about 150 µL of a hydrogen peroxide solution and an incubation at about ambient temperature for about 5 minutes. In other examples, hydrogen peroxide block step (230) may include other suitable volumes of hydrogen peroxide solution at other suitable incubation times and temperatures.

After epitope retrieval step (210), wash step (220), and hydrogen peroxide block step (230), a deionized water step (240) is performed. Deionized water step (240) of the present example includes dispensing 150 µL of deionized water onto a given slide at ambient temperature with substantially no incubation. The dispense of about 150 µL is repeated three times for three total dispenses. In other examples, a variety of alternative dispenses may be used such as more than three, or less than three.

After epitope retrieval step (210), wash step (220), hydrogen peroxide block step (230), and deionized water step (240), a bleaching step (250) is performed. Bleaching step (250) includes a series of dispenses of a bleaching agent and subsequent incubation. In the present example, bleaching step (250) includes a first dispense cycle (252), a second dispense cycle (254), a third dispense cycle (256), and a fourth dispense cycle (258). Each dispense cycle (252, 254, 256, 258) includes about two 150 µL dispenses of bleaching agent onto a given slide followed by an incubation. Although the present example includes four separate dispense cycles (252, 254, 256, 258) with two individual dispenses performed in each dispense cycle (252, 254, 256, 258), it should that different dispense combinations may be used in other examples. For instance, the particular number of dispense cycles (252, 254, 256, 258) may be directly proportional to bleaching intensity. Thus, in examples where greater bleaching intensity is desired, a greater number of dispense cycles (252, 254, 256, 258) may be performed. Similarly, the particular number of dispenses in a given dispense cycle (252, 254, 256, 258) may be directly proportional to bleaching intensity. Thus, in examples where greater bleaching intensity is desired, a greater number of dispenses in a given dispense cycle (252, 254, 256, 258) may also be performed.

As described above, each dispense cycle (252, 254, 256, 258) includes an incubation. In the present example, all incubations are generally performed with the given slide being heated to a temperature of about 60 °C, while the incubation time may be varied between about 20 minutes and about 60 minutes. In particular, the incubation time is about 20 minutes for first dispense cycle (252), about 30 minutes for second dispense cycle (254), and about 60 minutes for third dispense cycle (256) and fourth dispense cycle (258). In other words, the incubation time begins at 20 minutes for first dispense cycle (252) and then progressively increases in time for each subsequent dispense cycle (254, 256, 258) before plateauing at 60 minutes for the two final dispense cycles (256, 258). Thus, in examples with a greater number of dispense cycles (252, 254, 256, 258), a similar incubation time progression may be used with either a slower rate of progressive increase or a greater number of dispense cycles (252, 254, 256, 258) at the maximum incubation time. Although particular minimum and maximum incubation times are used in the present example, it should be understood that in other examples, either a different minimum incubation time or a different maximum incubation time may be used.

The particular bleaching agent used for bleaching step (250) in the present example is hydrogen peroxide (H₂O₂). In particular, bleaching agent includes 6% hydrogen peroxide, although different hydrogen peroxide concentrations may be used in other examples. In other examples, various alternative bleaching agents may be used.

After epitope retrieval step (210), wash step (220), hydrogen peroxide block step (230), deionized water step (240) and bleaching step (250), a final wash step (260) may is performed. Final wash step (260) may be desirable to clear any remaining reagents such as bleaching agent before primary marker step (130) of staining protocol (100). Final wash step (260) is performed by dispensing a washing agent to a given slide. Washing agent may include deionized water, a buffer solution, or various combinations thereof. It should be understood that final wash step (260) is entirely optional and may be omitted in some examples.

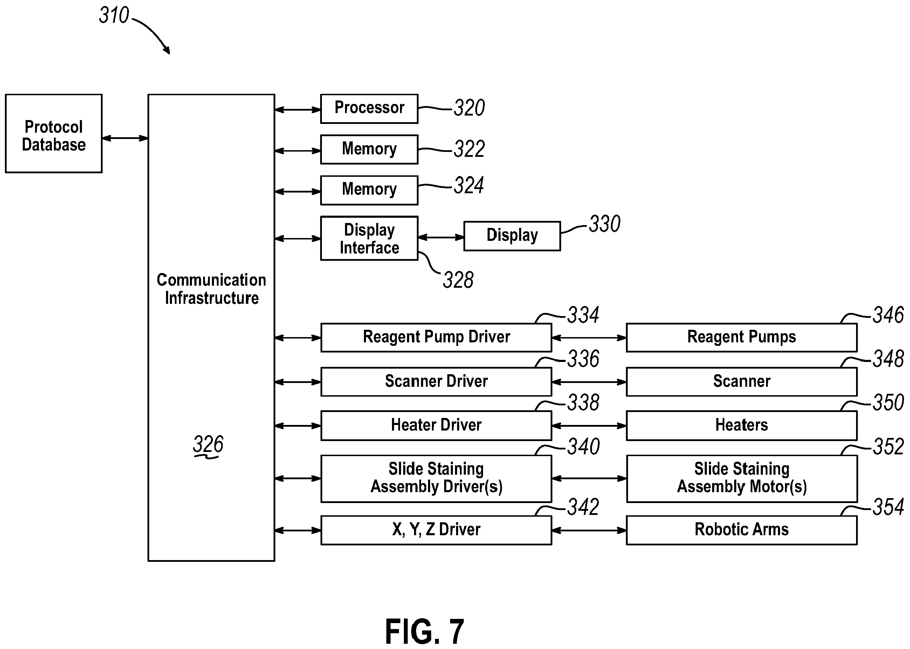

FIG. 7 shows an example of a control system (310) that may be used to implement staining protocol (100) and/or bleaching protocol (200) as described herein using slide-staining instrument (10). Control system (310) includes a processor (320) in communication with a first memory device (322) for storing computer program code and a second memory device (324) for storing data generated by processor (320) when implementing the computer program code, via communications infrastructure (326). Optionally, the functions of first memory device (322) and second memory device (324) may be combined in a single memory device or a plurality of memory devices in communication with each other.

Control system (310) further includes one or more inputs and one or more outputs to facilitate operator interaction with control system (310). For instance, in the present example, control system (310) includes a display interface (328) and corresponding display (330) to enable operator interaction with control system (310). In some examples, display (330) may be configured as a touch screen display so display (330) may both receive operator input and communicate operator outputs. In addition, or in the alternative, control system (310) may include one or more operator input features such as a keyboard or keypad to provide a dedicated operator input feature.

Control system (310) also includes driver modules (334, 336, 338, 340, 342) for controlling the motors, pumps, scanners, heaters and other devices (346, 348, 350, 352, 354) used for operation of the slide-staining instrument (10). It will be appreciated that in FIG. 7, examples only of driver modules and devices are depicted, and a person of skill in the art will be able to determine the driver modules and devices required to implement slide-staining instrument (10) to provide the functionality described herein.

It should be understood that memory devices (322, 324) may be disposed within a portion of slide-staining instrument (10) or may be hosted remote from slide-staining instrument (10) in data communication with processor (320). Regardless of the particular configuration, processor (320) is configured to read instructions from first memory device (322) to operate slide-staining instrument (10) to complete one or more slide staining protocols. Such staining protocols (e.g. order of reagents to be dispensed by batch fluid dispenser (46) and group fluid dispenser (12) to slides) are stored in a protocol database (356) accessible by processor (320) via communications infrastructure (326), such that processor (320) can configure batch fluid dispenser (46) and group fluid dispenser (12) to dispense re-agents and/or other slide staining media to slides disposed within each slide staining assembly (40) in a predetermined order and at predetermined intervals.

### III. Exemplary Combinations

The following examples relate to various non-exhaustive ways in which the teachings herein may be combined or applied. It should be understood that the following examples are not intended to restrict the coverage of any claims that may be presented at any time in this application or in subsequent filings of this application. No disclaimer is intended. The following examples are being provided for nothing more than merely illustrative purposes. It is contemplated that the various teachings herein may be arranged and applied in numerous other ways. It is also contemplated that some variations may omit certain features referred to in the below examples. Therefore, none of the aspects or features referred to below should be deemed critical unless otherwise explicitly indicated as such at a later date by the inventors or by a successor in interest to the inventors. If any claims are presented in this application or in subsequent filings related to this application that include additional features beyond those referred to below, those additional features shall not be presumed to have been added for any reason relating to patentability.

### Example 1

An automated slide staining apparatus for treating one or more tissue samples disposed on slides, the apparatus comprising: a controller; a slide staining assembly, the slide staining assembly being configured to receive one or more of the slides; and at least one fluid dispensing robot configured by the controller to dispense a plurality of reagents to the one or more slides received in the slide staining assembly to treat the one or more tissue samples respectively, the at least one fluid dispensing robot being configured by the controller to dispense one or more reagents of the plurality of reagents in a predetermined sequence corresponding to a staining protocol for the one or more slides received in the slide staining assembly to treat the one or more tissue samples disposed on each slide independently, the at least one fluid dispensing robot being further configured by the controller to dispense one or more bleaching agents in a predetermined sequence corresponding to a bleaching protocol for the one or more slides received in the slide staining assembly to treat the one or more tissue samples disposed on each slide independently, and the at least one fluid dispensing robot being further configured by the controller to perform the predetermined sequence corresponding to the bleaching protocol between one or more steps of the predetermined sequence corresponding to the staining protocol.

### Example 2

The apparatus of Example 1, the at least one fluid dispensing robot being further configured by the controller to dispense the one or more bleaching agents in at least four bleaching cycles with each bleaching cycle including at least one dispense of the one or more bleaching agents.

### Example 3

The apparatus of Example 1, the at least one fluid dispensing robot being further configured by the controller to dispense the one or more bleaching agents in at least four bleaching cycles with each bleaching cycle including at least two dispenses of the one or more bleaching agents.

### Example 4

The apparatus of Example 1, the at least one fluid dispensing robot being further configured by the controller to dispense the one or more bleaching agents in a predetermined number of bleaching cycles with each bleaching cycle including at least one dispense of the one or more bleaching agents, the at least one fluid dispensing robot being further configured by the controller to adjust the predetermined number of bleaching cycles proportionally with a predetermined bleaching intensity.

### Example 5

The apparatus of any of Examples 1 through 4, the slide staining assembly being configured by the controller to heat each slide received by the slide staining assembly independently to an incubation temperature.

### Examples 6

The apparatus of any of Examples 1 through 4, the slide staining assembly being configured by the controller to heat each slide received by the slide staining assembly independently to an incubation temperature during the bleaching protocol.

### Example 7

The apparatus of any of Examples 1 through 4, the slide staining assembly being configured by the controller to heat each slide received by the slide staining assembly independently to an incubation temperature of about 60° C during the bleaching protocol.

### Example 8

The apparatus of any of Examples 5 through 7, the at least one fluid dispensing robot being further configured by the controller to limit dispensing of the one or more bleaching agents while each slide is heated by the slide staining assembly at the incubation temperature for a predetermined incubation time.

### Example 9

The apparatus of any of Examples 5 through 7, the at least one fluid dispensing robot being further configured by the controller to limit dispensing of the one or more bleaching agents while each slide is heated by the slide staining assembly at the incubation temperature for a predetermined incubation time of 20 to 60 minutes.

### Example 10

The apparatus of any of Examples 5 through 7, the at least one fluid dispensing robot being further configured by the controller to limit dispensing of the one or more bleaching agents while each slide is heated by the slide staining assembly at the incubation temperature for a predetermined incubation time of about 20 minutes.

### Example 11

The apparatus of any of Examples 5 through 7, the at least one fluid dispensing robot being further configured by the controller to limit dispensing of the one or more bleaching agents while each slide is heated by the slide staining assembly at the incubation temperature for a predetermined incubation time of about 30 minutes.

### Example 12

The apparatus of any of Examples 5 through 7, the at least one fluid dispensing robot being further configured by the controller to limit dispensing of the one or more bleaching agents while each slide is heated by the slide staining assembly at the incubation temperature for a predetermined incubation time of about 60 minutes.

### Example 13

The apparatus of any of Examples 5 through 7, the at least one fluid dispensing robot being further configured by the controller to limit dispensing of the one or more bleaching agents while each slide is heated by the slide staining assembly at the incubation temperature for a predetermined incubation time of 20 to 60 minutes, the at least one fluid dispensing robot being further configured to increase the predetermined incubation time at least once during the bleaching protocol.

### Example 14

The apparatus of any of Examples 1 through 13, the one or more bleaching agents including hydrogen peroxide.

### Example 15

The apparatus of any of Examples 1 through 13, the one or more bleaching agents including 6% hydrogen peroxide.

### Example 16

A method for automated staining of one or more tissue samples disposed on a slide, the method comprising: dispensing one or more reagents to the one or more tissue samples using one or more automated fluid dispensers in a first series of staining steps associated with a slide staining protocol; dispensing one or more reagents to the one or more tissue samples using the one or more automated fluid dispensers in a first series of bleaching steps associated with a bleaching protocol; dispensing one or more bleaching agents to the one or more tissue samples using the one or more automated fluid dispensers in one or more bleaching cycles associated with the bleaching protocol; and continuing the slide staining protocol after performing the bleaching protocol by dispensing one or more reagents to the one or more tissue samples using the one or more automated fluid dispensers in a second series of staining steps associated with the slide staining protocol.

### Example 17

The method of Example 16, the step of dispensing one or more bleaching agents including performing four or more bleaching cycles.

### Example 18

The method of Example 16, the step of dispensing one or more bleaching agents including performing four or more bleaching cycles with each bleaching cycle including two dispenses of the one or more bleaching agents.

### Example 19

The method of Example 16, the step of dispensing one or more bleaching agents including performing four or more bleaching cycles with each bleaching cycle including two about 150 µL dispenses of the one or more bleaching agents.

### Example 20

The method of Example 16, the step of dispensing one or more bleaching agents including performing a predetermined number of bleaching cycles, the predetermined number of bleaching cycles corresponding to a predetermined intensity of bleaching.

### Example 21

The method of any of Examples 16 through 20, each bleaching cycle of the one or more bleaching cycles including an incubation at a predetermined incubation temperature and a predetermined incubation time.

### Example 22

The method of any of Examples 16 through 20, each bleaching cycle of the one or more bleaching cycles including an incubation at a predetermined incubation temperature of about 60° C and a predetermined incubation time of at least 20 minutes.

### Example 23

The method of any of Examples 16 through 20, each bleaching cycle of the one or more bleaching cycles including an incubation at a predetermined incubation temperature of about 60° C and a predetermined incubation time of between about 20 and 60 minutes.

### Example 24

The method of any of Examples 16 through 20, each bleaching cycle of the one or more bleaching cycles including an incubation at a predetermined incubation temperature of about 60° C and a predetermined incubation time of less than 60 minutes.

### Example 25

The method of any of Examples 16 through 20, each bleaching cycle of the one or more bleaching cycles including an incubation at a predetermined incubation temperature of about 60° C and a predetermined incubation time, the predetermined time being determined based on the particular number of bleaching cycles performed.

### Example 26

The method of any of Examples 16 through 25, further comprising washing the one or more tissue samples after the step of dispensing the one or more bleaching agents and before the step of continuing the slide staining protocol.

### Example 27

The method of any of Examples 16 through 26, furthering comprising dispensing a primary marker reagent to the one or more tissue samples as a part of the slide staining protocol, the step of dispensing the primary marker reagent being performed after performing the bleaching protocol.

### Example 28

The method of any of Examples 16 through 27, the slide staining protocol and the bleaching protocol being performed using the same instrument.

### Example 29

An automated slide staining apparatus comprising: a robotic arm; one or more fluid dispensers, at least one of the one or more fluid dispensers being associated with the robotic arm, each fluid dispenser being configured to dispense fluids; one or more slide trays, each slide tray being configured to hold a plurality of slides; and a controller, the controller being configured to: drive the robotic arm and the one or more fluid dispensers to dispense one or more reagents onto each slide held by the one or more slide trays, drive the one or more fluid dispensers to dispense the one or more reagents in a predetermined sequence corresponding to a slide staining protocol, and drive the one or more fluid dispensers to dispense a bleaching agent in a bleaching cycle onto one or more slides held by the one or more slide trays between two steps of the slide staining protocol.

### Example 30

The apparatus of Example 29, the controller being further configured to drive the one or more fluid dispensers to dispense the bleaching agent onto the one or more slides in at least four bleaching cycles with each bleaching cycle including at least two dispenses of the bleaching agent.

### Example 31

The apparatus of Examples 29 or 30, further comprising a slide staining assembly, the slide staining assembly being configured to receive each slide tray of the one or more slide trays, the slide staining assembly being configured to heat each slide independently to a predetermined incubation temperature of about 60° C during the bleaching cycle.

### Example 32

The apparatus of Examples 29 or 30, further comprising a slide staining assembly, the slide staining assembly being configured to receive each slide tray of the one or more slide trays, the slide staining assembly being configured to heat each slide independently to a predetermined incubation temperature of about 60° C during the bleaching cycle and for a predetermined incubation time of between about 20 to 60 minutes.

### Example 33

The apparatus of any of Examples 29 through 32, the bleaching agent including hydrogen peroxide.

### IV. Conclusion

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein will only be incorporated to the extent that no conflict arises between that incorporated material and the existing disclosure material.

Having shown and described various embodiments of the present invention, further adaptations of the methods and systems described herein may be accomplished by appropriate modifications by one of ordinary skill in the art without departing from the scope of the present invention. Several of such potential modifications have been mentioned, and others will be apparent to those skilled in the art. For instance, the examples, embodiments, geometrics, materials, dimensions, ratios, steps, and the like discussed above are illustrative and are not required. Accordingly, the scope of the present invention should be considered in terms of the following claims and is understood not to be limited to the details of structure and operation shown and described in the specification and drawings.

## Claims

1. An automated slide staining apparatus for treating one or more tissue samples disposed on slides, the apparatus comprising:
(a) a controller;
(b) a slide staining assembly, the slide staining assembly being configured to receive one or more of the slides; and
(c) at least one fluid dispensing robot configured by the controller to dispense a plurality of reagents to the one or more slides received in the slide staining assembly to treat the one or more tissue samples respectively,
the at least one fluid dispensing robot being configured by the controller to dispense one or more reagents of the plurality of reagents in a predetermined sequence corresponding to a staining protocol for the one or more slides received in the slide staining assembly to treat the one or more tissue samples disposed on each slide independently,
the at least one fluid dispensing robot being further configured by the controller to dispense one or more bleaching agents in a predetermined sequence corresponding to a bleaching protocol for the one or more slides received in the slide staining assembly to treat the one or more tissue samples disposed on each slide independently, and
the at least one fluid dispensing robot being further configured by the controller to perform the predetermined sequence corresponding to the bleaching protocol between one or more steps of the predetermined sequence corresponding to the staining protocol.

2. The apparatus of claim 1, the at least one fluid dispensing robot being further configured by the controller to dispense the one or more bleaching agents in at least four bleaching cycles with each bleaching cycle including at least one dispense of the one or more bleaching agents.

3. The apparatus of claim 1, the at least one fluid dispensing robot being further configured by the controller to dispense the one or more bleaching agents in at least four bleaching cycles with each bleaching cycle including at least two dispenses of the one or more bleaching agents.

4. The apparatus of claim 1, the at least one fluid dispensing robot being further configured by the controller to dispense the one or more bleaching agents in a predetermined number of bleaching cycles with each bleaching cycle including at least one dispense of the one or more bleaching agents, the at least one fluid dispensing robot being further configured by the controller to adjust the predetermined number of bleaching cycles proportionally with a predetermined bleaching intensity.

5. The apparatus of any of claims 1 through 4, the slide staining assembly being configured by the controller to heat each slide received by the slide staining assembly independently to an incubation temperature.

6. The apparatus of any of claims 1 through 4, the slide staining assembly being configured by the controller to heat each slide received by the slide staining assembly independently to an incubation temperature during the bleaching protocol.

7. The apparatus of any of claims 1 through 4, the slide staining assembly being configured by the controller to heat each slide received by the slide staining assembly independently to an incubation temperature of about 60° C during the bleaching protocol.

8. The apparatus of any of claims 5 through 7, the at least one fluid dispensing robot being further configured by the controller to limit dispensing of the one or more bleaching agents while each slide is heated by the slide staining assembly at the incubation temperature for a predetermined incubation time.

9. The apparatus of any of claims 5 through 7, the at least one fluid dispensing robot being further configured by the controller to limit dispensing of the one or more bleaching agents while each slide is heated by the slide staining assembly at the incubation temperature for a predetermined incubation time of 20 to 60 minutes.

10. The apparatus of any of claims 5 through 7, the at least one fluid dispensing robot being further configured by the controller to limit dispensing of the one or more bleaching agents while each slide is heated by the slide staining assembly at the incubation temperature for a predetermined incubation time of about 20 minutes.

11. The apparatus of any of claims 5 through 7, the at least one fluid dispensing robot being further configured by the controller to limit dispensing of the one or more bleaching agents while each slide is heated by the slide staining assembly at the incubation temperature for a predetermined incubation time of about 30 minutes.

12. The apparatus of any of claims 5 through 7, the at least one fluid dispensing robot being further configured by the controller to limit dispensing of the one or more bleaching agents while each slide is heated by the slide staining assembly at the incubation temperature for a predetermined incubation time of about 60 minutes.

13. The apparatus of any of claims 5 through 7, the at least one fluid dispensing robot being further configured by the controller to limit dispensing of the one or more bleaching agents while each slide is heated by the slide staining assembly at the incubation temperature for a predetermined incubation time of 20 to 60 minutes, the at least one fluid dispensing robot being further configured to increase the predetermined incubation time at least once during the bleaching protocol.

14. The apparatus of any of claims 1 through 13, the one or more bleaching agents including hydrogen peroxide.

15. The apparatus of any of claims 1 through 13, the one or more bleaching agents including 6% hydrogen peroxide.
